# EUROPEAN PATENT APPLICATION

(11) **EP 4 686 598 A1**
(43) Date of publication of application: **04.02.2026**
(21) Application number: 25190343.1
(22) Date of filing: 18.07.2025
(51) Int. Cl.: B60L 3/00, B60L 3/04

(54) **ELECTRICAL SYSTEM OF A VEHICLE HAVING HIGH SAFETY AND HIGH EASE OF MAINTENANCE**

(30) Priority: 30.07.2024 IT 202400017725
(71) Applicant: IVECO S.P.A., 10156 Torino (IT)
(72) Inventor: PERRONE, Attilio, 10156 Torino (IT); ROCCI, Andrea, 10156 Torino (IT); BERNARDINI, Alessandro, 10156 Torino (IT)
(74) Representative: Studio Torta S.p.A.

(57) **Abstract**

An electrical system for an electric or hybrid vehicle and having an electrical supply source (3). The system comprises a plurality of high-voltage interlock loop, HVIL, circuits (13, 20, 40) electrically distinct one from the other; and electronic control means (53A-53C, 9, 26, 33) configured to: detect an electrical discontinuity in the plurality of HVIL circuits; and regulate the electrical supply of the vehicle, in response to the detection of an electrical discontinuity in at least one of the HVIL circuits.

## Description

### CROSS-REFERENCE TO RELATED APPLICATIONS

This patent application claims priority from Italian patent application no. 102024000017725 filed on July 30, 2024, the entire disclosure of which is incorporated herein by reference.

### TECHNICAL FIELD

The present invention relates to an electrical system of a vehicle having high safety and high ease of maintenance.

In particular, the invention refers to an electric or hybrid vehicle such as, for example, a land vehicle on wheels.

### STATE OF THE PRIOR ART

As is known, electric vehicles, i.e. fully electric or hybrid vehicles, have a battery pack which forms a supply source of the vehicle.

Specifically, the battery pack is a high-voltage supply source, for example up to 1.2 kV.

The energy provided by the battery pack is utilized by the electrical system of the vehicle for the propulsion of the vehicle, i.e. to provide driving power to the vehicle, as well as for other functions such as, for example, heating/cooling a cabin of the vehicle.

The fact that the vehicle is powered by a high voltage can be a safety hazard for a user of the vehicle.

In fact, the malfunction and the failure of some electrical components powered by the high voltage can cause hazardous events for the user of the vehicle such as, for example, short circuits.

For example, a short circuit could occur between the high voltage and the frame of the vehicle, with the consequent risk of electrocution for a user of the vehicle.

In this regard, it is known to incorporate a High-Voltage Interlock Loop (HVIL) circuit, in the following also simply indicated as HVIL circuit, in the electrical system of the vehicle.

The HVIL circuit of the known electrical systems is a circuit that mutually connects in series all of the electrical components of the vehicle, for example electric motor, PTC (Positive Temperature Coefficient) heaters, High-Voltage Power Distribution Unit (HVPDU), and Electric Power Control Unit (EPCU), which are powered by the high voltage.

The HVIL circuit comprises an input node and an output node and forms a closed current path between the input node and the output node which connects the high-voltage connectors of the electrical components powered by the high voltage to one another.

The HVIL circuit provides a low-voltage signal between the input node and the output node.

The known electrical system also comprises a control unit that monitors the presence of electrical continuity in the HVIL circuit between the input node and the output node.

In the event of malfunctions or failures in the high-voltage connectors of the electrical components powered by the high voltage, an electrical discontinuity is formed in the current path of the HVIL circuit.

In response to the detection of the electrical discontinuity, the control unit disconnects the battery pack from the electrical system, so as to interrupt the supply of high voltage to the electrical system and to the respective electrical components.

In this manner, it is possible to avoid safety problems caused by the malfunction of one or more electrical components.

However, the step of repairing and maintaining the known vehicle described above, in order to verify which is the malfunctioning electrical component, results to be difficult and long.

This involves a long time for analyzing and solving the problem, with a consequent increase in repair and maintenance costs.

The need is thus felt to provide an electrical system of a vehicle having high safety and simultaneously easy repair in the event of faults.

The object of the present invention is to satisfy the needs set forth above in a cost-effective and optimized manner.

### SUMMARY OF THE INVENTION

The aforementioned object is achieved by an electrical system and a vehicle, as claimed in the appended claims.

### BRIEF DESCRIPTION OF THE DRAWINGS

For a better understanding of the present invention, embodiments are described in the following, by way of nonlimiting example and with reference to the accompanying drawings, wherein:
- Figures 1-3 show simplified circuit diagrams of portions of an electrical system of a vehicle, according to an embodiment; and
- Figure 4 shows the simplified circuit diagram of an additional portion of the electrical system of Figure 1, according to an embodiment.

### DETAILED DESCRIPTION OF THE INVENTION

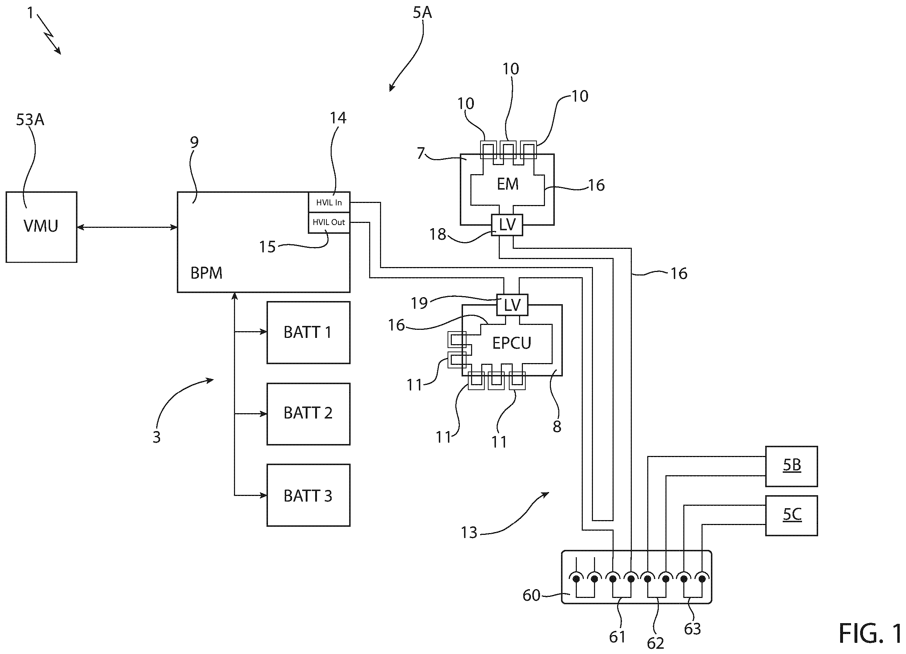

Figures 1-3 show a simplified circuit diagram of an electrical system 1 of a vehicle.

The vehicle may be, for example, a land vehicle and in particular a vehicle on wheels such as, for example, a car, a heavy vehicle, a commercial vehicle, etc., for transporting people and/or goods.

In particular, the electrical system 1 is an electrical system of an electric-powered vehicle, preferably fully electric. However, the vehicle may also be a hybrid electric vehicle.

The vehicle is powered by an electrical supply source that may be internal or external to the vehicle.

Specifically, in the embodiment shown in Figures 1-3, the electrical system 1 comprises, as electrical supply source of the vehicle, a battery pack 3 formed by a plurality of batteries.

The electrical supply source of the vehicle is preferably a high-voltage supply source, **i.e.** configured to provide a voltage comprised, for example, between 60 V and 1.2 kV, in particular comprised between 60 V and 1000 V, and even more in particular of approximately 800 V.

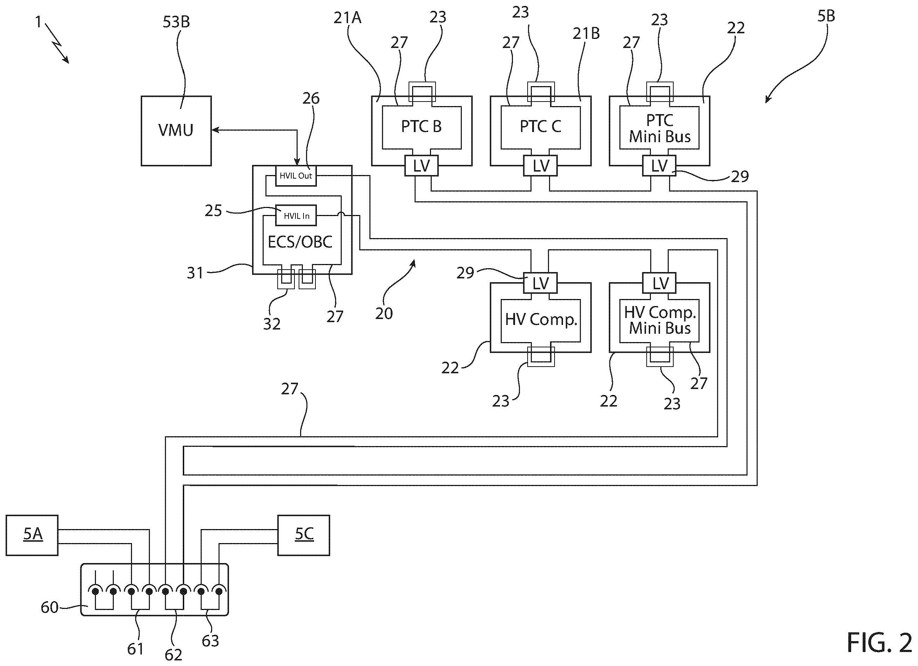

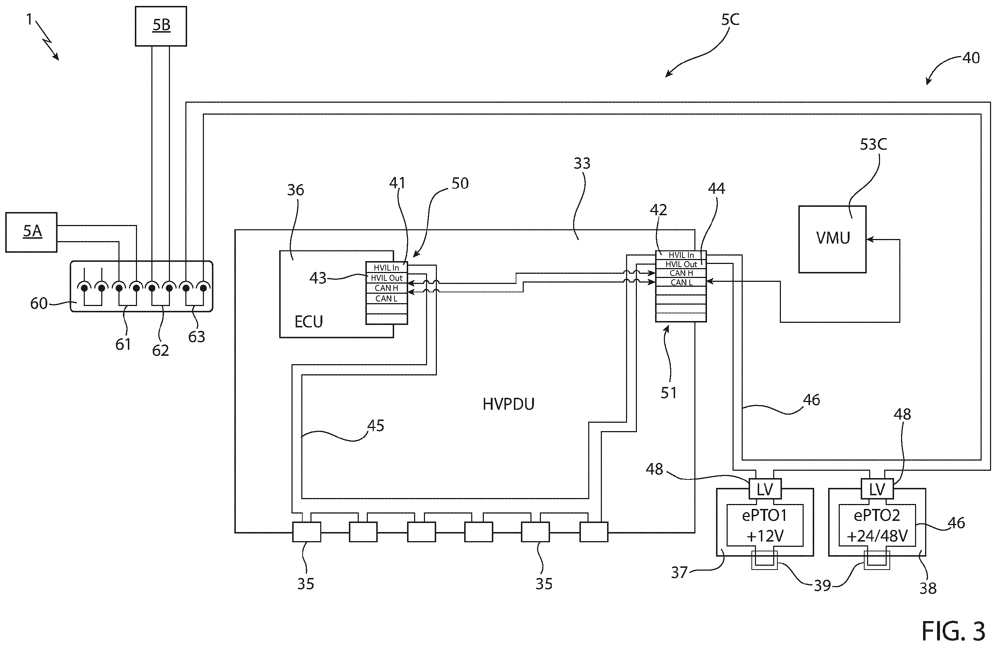

The electrical system 1 comprises a plurality of functional groups, in particular a transmission (driveline) functional group 5A (Figure 1), a thermal functional group 5B (Figure 2) and an auxiliary functional group 5C (Figure 3).

The transmission functional group 5A is configured to utilize the power received from the battery pack 3 for the propulsion of the vehicle.

In other words, the transmission functional group 5A is configured to provide driving power to the vehicle starting from the high voltage provided by the battery pack 3.

Specifically, the transmission functional group 5A comprises a plurality of electrical transmission components, i.e. electrical machines configured to allow the propulsion of the vehicle starting from the high voltage provided by the batteries 3.

In particular, in the embodiment of Figure 1, the electrical transmission components comprise an electric motor 7 and an electric power control unit (EPCU) 8, which control the propulsion of the vehicle, starting from the high voltage provided by the battery pack 3.

The electric motor 7 and the EPCU 8 each comprise a plurality of respective high-voltage electrical connectors 10, 11, for example for receiving the high-voltage power supply from the battery pack 3 or for providing high voltage to further components.

The transmission functional group 5A also comprises an electronic battery-management unit 9, which is coupled to the battery pack 3 and is configured to regulate the functioning of the batteries 3.

The transmission functional group 5A further comprises a transmission high-voltage interlock loop circuit 13 (in the following simply indicated as transmission HVIL circuit 13) coupled to the electrical transmission components (electric motor 7 and EPCU 8) and configured to test the electrical continuity between the electrical transmission components.

The transmission HVIL circuit 13 comprises an input node 14 and an output node 15 and a transmission structure 16 which extends between the input node 14 and the output node 15.

The input node 14 may comprise means, for example a voltage generator, configured to generate a monitoring signal, for example a low-voltage signal (e.g., 12 V).

The output node 15 may comprise means, for example a current detector, configured to measure a current flowing in the transmission structure 16 between the input node 14 and the output node 15.

The transmission structure 16, for example formed by one or more conductive cables, extends through the electric motor 7 and the EPCU 8.

Specifically, the transmission structure 16 also extends inside the high-voltage connectors 10, 11.

The high-voltage connectors 10, 11 are configured, when correctly coupled to an external high-voltage line, to also close the current path of the transmission structure 16.

In practice, when all electrical transmission components, and in particular the respective high-voltage connectors, function correctly, the transmission structure 16 forms a (closed) current path, in particular a series-type path, between the input node 14 and the output node 15.

The electric motor 7 may also comprise a respective voltage converter 18, in particular provided with galvanic insulation, for coupling the transmission structure 16 between the inside and the outside of the electric motor 7.

The EPCU 8 may also comprise a respective voltage converter 19, in particular provided with galvanic insulation, for coupling the transmission structure 16 between the inside and the outside of the EPCU 8.

In the embodiment of Figure 1, the input node 14 and the output node 15 are integrated in the electronic battery-management unit 9. This may be advantageous in the case where the electronic battery-management unit 9 is an active electrical component configured to generate the monitoring signal of the transmission HVIL circuit 13.

The thermal functional group 5B (Figure 2) is configured to utilize the power received from the battery pack 3 to control a temperature of the vehicle.

The thermal functional group 5B may regulate an internal temperature of the vehicle such as, for example, the temperature of a cabin of the vehicle.

In other words, the thermal functional group 5B is configured to regulate the heating and/or cooling of the vehicle starting from the high voltage provided by the battery pack 3.

Specifically, the thermal functional group 5B comprises a plurality of electrical temperature-control components, in particular a plurality of positive-temperature-coefficient (PCT) heaters 21A, 21B, which control the heating and/or cooling of the vehicle, starting from the high voltage provided by the battery pack 3.

Optionally, in the embodiment of Figure 1, the thermal functional group may comprise further electrical components, generically indicated by 22, powered by the high voltage provided by the batteries 3.

The PTC heaters 21A, 21B and the electrical components 22 each comprise a plurality of respective high-voltage electrical connectors 23, for example for receiving the high-voltage power from the battery pack 3.

The thermal functional group 5B further comprises a thermal high-voltage interlock loop circuit 20 (in the following simply indicated as thermal HVIL circuit 20) coupled to the electrical components 21A-21B and 22, and configured to test the electrical continuity between the electrical components 21A-21B and 22.

The thermal HVIL circuit 20 comprises an input node 25 and an output node 26 and a transmission structure 27 which extends between the input node 25 and the output node 26.

The input node 25 may comprise means, for example a voltage generator, configured to generate a monitoring signal, for example a low-voltage signal (e.g., 12 V).

The output node 26 may comprise means, for example a current detector, configured to measure a current flowing in the transmission structure 27 between the input node 25 and the output node 26.

The transmission structure 27, for example formed by one or more conductive cables, extends through the PTC heaters 21A, 21B and the electrical components 22.

Specifically, the transmission structure 27 extends, inside the components 21-21B and 22, inside the high-voltage connectors 23.

The high-voltage connectors 23 are configured, when correctly coupled to an external high-voltage line, to also close the current path of the transmission structure 27.

In practice, when all electrical components 21A-21B and 22, in particular the respective high-voltage connectors 23, function correctly, the transmission structure 27 forms a (closed) current path, in particular a series-type path, between the input node 25 and the output node 26.

The PTC heaters 21A-21B and the components 22 may also comprise respective voltage converters 29, in particular each provided with galvanic insulation, for coupling the transmission structure 27 between the inside and the outside of the PTC heaters 21A-21B and of the components 22.

The electrical system 1 further comprises an on-board charger (OBC) unit 31, comprising high-voltage connectors 32 configured to couple to the battery pack 3 and thus to allow recharging thereof.

In this embodiment, the input node 25 and the input node 27 are integrated inside the on-board charger unit 31. In practice, in this embodiment, the thermal HVIL circuit 20 passes also through the on-board charger unit 31 and the respective high-voltage connectors 32.

The auxiliary functional group 5C (Figure 3) is configured to utilize the power received from the battery pack 3 to power one or more electrical components that are useful for the functioning of the vehicle. For example, one or more electrical machines for allowing the vehicle to execute specific functions such as, for example, DC-DC converters for supplying compressors (for example for a refrigerator), or electric motors for moving hydraulic pumps for crane arms, compactors, loading platforms, etc.

Specifically, the auxiliary functional group 5C comprises a high-voltage power distribution unit (HVPDU) 33 having a plurality of high-voltage connectors 35 to which the auxiliary electrical components which are useful for the functioning of the vehicle may be coupled.

The HVPDU 33 distributes part of the power received from the battery pack 3 to the auxiliary components connected to the high-voltage connectors 35.

The HVPDU 33 also comprises an electronic control unit 36 for controlling the power delivered to the auxiliary devices and for communicating with a central control unit of the vehicle, which is not shown herein.

Optionally, in the embodiment of Figure 1, the auxiliary functional group 5C may comprise further electrical components 37, 38, for example electrical machines such as inverters, that are powered by the high voltage provided by the batteries 3.

The electrical components 37, 38 each have a respective high-voltage electrical connector 39, for example for receiving the high-voltage power from the battery pack 3 and/or for connecting to further external devices not shown herein.

The auxiliary functional group 5C further comprises an auxiliary high-voltage interlock loop circuit 40 (in the following simply called auxiliary HVIL circuit 40) coupled to the HVPDU 33 and to the electrical components 37, 38, and configured to test the electrical continuity thereof.

The auxiliary HVIL circuit 40 may comprise two input nodes 41, 42; two output nodes 43, 44 and two transmission structures 45, 46 which extend between the input node 41 and the output node 43 and between the input node 42 and the output node 44, respectively.

The input nodes 41, 42 may each comprise means, for example a voltage generator, configured to generate a monitoring signal, for example a low-voltage signal (e.g., 12 V) .

The output nodes 43, 44 may comprise means, for example current detectors, configured to measure a current flowing in the transmission structures 45, 46 between the input node 41 and the output node 43 and between the input node 42 and the output node 44, respectively.

The transmission structure 45, for example formed by one or more conductive cables, extends inside the HVPDU 33 and, in particular, through the respective high-voltage connectors 35.

The transmission structure 46, for example formed by one or more conductor cables, extends between the input node 42 and the output node 44 and is coupled to the electrical components 37, 38, in particular to the respective high-voltage connectors 40.

In particular, the transmission structures 45, 46 may be configured to form a single looped current path which mutually connects in series the HVPDU 33 and the components 37, 38.

The high-voltage connectors 35, 40 are also configured, when correctly coupled to an external high-voltage line, to also close the current path of the auxiliary HVIL circuit 40.

In practice, when the HVPDU 33 and the electrical components 37, 38, in particular the respective high-voltage connectors 35, 40, function correctly, the auxiliary HVIL circuit 40 forms a (closed) current path, in particular a series-type path.

The electrical components 37, 38 may also comprise respective voltage converters 48, in particular each provided with galvanic insulation, for coupling the transmission structure 46 between the inside and the outside of the electrical components 37, 38.

In this embodiment, the input nodes 41, 42 and the output nodes 43, 44 are integrated inside the HVPDU 33.

Specifically, the input node 41 and the output node 43 are integrated in an I/O interface 50 of the ECU 36, and the input node 42 and the output node 44 are integrated in an I/O interface 51 of the HVPDU 33.

Moreover, the I/O interfaces 50, 51 may also be configured to communicate with each other, for example via one or more data buses such as, for example, of the CAN type.

The electrical system 1 further comprises a plurality of electronic vehicle-control units 53A, 53B, 53C, one for each respective functional group 5A-5C.

The electronic vehicle-control unit 53A is electrically coupled to the battery-management unit 9; the electronic vehicle-control unit 53B is electrically coupled to the on-board charger unit 31; and the electronic vehicle-control unit 53C is electrically coupled to the HVPDU 33, and in particular to the ECU 36.

In use, the battery-management unit 9 monitors the electrical continuity of the transmission HVIL circuit 13.

For example, in order to monitor the electrical continuity of the transmission HVIL circuit 13, the battery-management unit 9 may apply a voltage difference between the input node 14 and the output node 15 and measure the current flowing along the transmission structure 16. If the current measured along the transmission structure 16 falls below a threshold, which may be defined, for example, during a step of calibrating or initializing the electrical system 1, then the battery-management unit 9 detects an electrical discontinuity in the transmission HVIL circuit 13, in particular along the respective transmission structure 16.

In other words, the battery-management unit 9 verifies the occurrence of an electrical discontinuity within the transmission HVIL circuit 13, in particular along the respective transmission structure 16.

For example, an electrical discontinuity can occur if one of the high-voltage connectors 10, 11 undergoes a failure or a malfunction, for example it can become (entirely or partly) detached as the result of a collision or an accidental event of different type.

In response to the detection of an electrical discontinuity along the transmission HVIL circuit 13, the battery-management unit 9 may send an electrical signal indicative of the detected discontinuity to the vehicle control unit 53A.

In response, the electronic unit 53A regulates the functioning of the battery pack 3.

Specifically, the electronic unit 53A may command the battery-management unit 9 to disconnect the battery pack 3 from the electrical system 1.

In addition, the electronic unit 53A may also discharge a high-voltage BUS of the electrical system 1.

In use, the on-board charger unit 31 monitors the electrical continuity of the thermal HVIL circuit 20.

For example, in order to monitor the electrical continuity of the thermal HVIL circuit 20, the on-board charger unit 31 may apply a voltage difference between the input node 25 and the output node 26 and measure the current flowing along the transmission structure 27. If the current measured along the transmission structure 27 falls below a threshold, which can be defined for example during a calibration or initialization step of the electrical system 1, then the on-board charger unit 31 detects an electrical discontinuity in the thermal HVIL circuit 20, in particular along the respective transmission structure 27.

In other words, the on-board charger unit 31 verifies the occurrence of an electrical discontinuity within the thermal HVIL circuit 20, in particular along the respective transmission structure 27.

For example, an electrical discontinuity can occur if one of the high-voltage connectors 23, 32 undergoes a failure or a malfunction, for example it can become (entirely or partially) detached as the result of a collision or an accidental event of different type.

In response to the detection of an electrical discontinuity along the thermal HVIL circuit 20, the on-board charger unit 31 may send an electrical signal indicative of the detected discontinuity to the electronic vehicle-control unit 53B.

In response, the electronic vehicle-control unit 53B regulates the functioning of the battery pack 3.

Specifically, the vehicle control unit 53B may command the battery-management unit 9 to disconnect the battery pack 3 from the electrical system 1.

In addition, the electronic unit 53B may also discharge a high-voltage BUS of the electrical system 1.

In use, the HVPDU 33, in particular the respective ECU 36, monitors the electrical continuity of the auxiliary HVIL circuit 40.

For example, to monitor the electrical continuity of the auxiliary HVIL circuit 40, the ECU 36 may apply a voltage difference between the input node 41 and the output node 43 and measure the current flowing along the transmission structure 45, and a voltage difference between the input node 42 and the output node 44 and measure the current flowing along the transmission structure 46.

If the current measured along one of the transmission structures 45, 46 falls below a threshold value, which can be defined for example during a calibration or initialization step of the electrical system 1, then the ECU 36 detects an electrical discontinuity in the auxiliary HVIL circuit 40, in particular along one of the respective transmission structures 45, 46.

In other words, the ECU 36 verifies the occurrence of an electrical discontinuity within the auxiliary HVIL circuit 40, in particular along one of the respective transmission structures 45, 46.

For example, an electrical discontinuity can occur if one of the high-voltage connectors 35, 40 undergoes a failure or a malfunction, for example it can become (entirely or partially) detached as the result of a collision or an accidental event of different type.

In response to the detection of an electrical discontinuity along the auxiliary HVIL circuit 40, the ECU 36 may send an electrical signal indicative of the detected discontinuity to the control unit 53B, for example via the I/O interfaces 50, 51.

In response, the electronic vehicle-control unit 53C regulates the functioning of the battery pack 3.

Specifically, the electronic vehicle-control unit 53C may command the battery-management unit 9 to disconnect the battery pack 3 from the electrical system 1.

In addition, the electronic unit 53C may also discharge a high-voltage BUS of the electrical system 1.

In practice, the electrical system 1 comprises a plurality of HVIL circuits distinct one from the other, i.e. independent of and electrically insulated from one another. The electronic control means (for example, the vehicle control units 53A-53C, the battery-management unit 9, the on-board charger unit 31, the HVPDU 33 in the embodiment of Figure 1) of the electrical system 1 monitor the electrical continuity of the HVIL circuits and, in response to the detection of an electrical discontinuity in one of the HVIL circuits, regulate the functioning of the electrical system 1, in particular interrupt the power supply of the electrical system 1 from the battery pack 3.

In this manner, in the presence of a possible failure or short circuit in the high-voltage circuit, a high safety of use of the vehicle is maintained.

At the same time, the presence of a plurality of HVIL circuits enables, during maintenance and repair of the vehicle, easily identifying the HVIL circuit in which the electrical discontinuity has occurred. In order to verify and repair the fault, the operator can thus verify the correct functioning of the sole electrical components, and respective high-voltage connectors, that are connected to the HVIL circuit in which the electrical discontinuity has occurred.

In practice, the operator does not necessarily have to verify the functioning of all the electrical components of the electrical system 1.

This enables simplifying and quickening the operations of maintaining and repairing the vehicle.

With reference to the embodiment of Figures 1-3, the electrical system 1 may also comprise a switch module 60, also known as "Manual Service Disconnect" (MSD), configured to cause an electrical interruption or discontinuity along one or more of the HVIL circuits 13, 20, 40, manually, by a user of the vehicle. For example, the switch module 60 can be useful during repair or maintenance of the vehicle for safety reasons, for example to avoid undesired short circuits.

In particular, the switch module 60 comprises a plurality of switches including the switches 61, 62 and 63, one for each of the HVIL circuits 13, 20, 40.

Specifically, the switch 61 is arranged along the transmission structure 16 and is configured to cause an electrical discontinuity in the transmission HVIL circuit 13.

The switch 62 is arranged along the transmission structure 27 and is configured to cause an electrical discontinuity in the thermal HVIL circuit 20.

The switch 63 is arranged along the transmission structure 46 and is configured to cause an electrical discontinuity in the auxiliary HVIL circuit 40.

The presence of a plurality of switches 61-63, one for each HVIL circuit 13, 20, 40, allows increasing the ease of maintenance and repair of the electrical system 1.

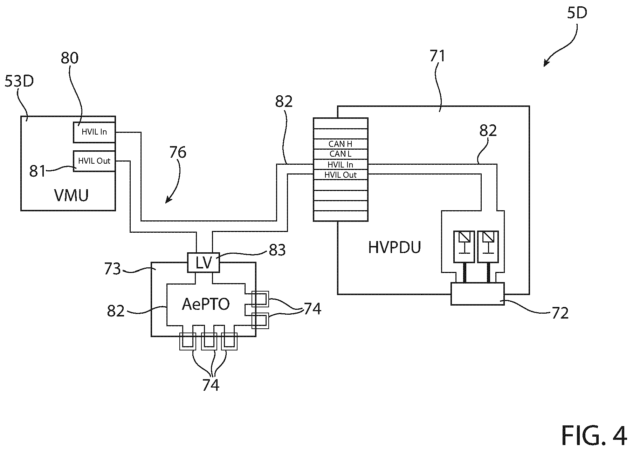

According to an embodiment, as is shown in Figure 4, the electrical system 1 may comprise a further, optional, functional group 5D configured to utilize the power supply received from the battery pack 3 to power one or more supplementary components that may be installable on the vehicle such as, for example, refrigeration cells, inverters for controlling a hydraulic arm or something else, depending on the specific type and application of the vehicle.

In detail, the functional group 5D comprises a high-voltage power distribution unit (HVPDU) 71 having a high-voltage connector 72, for example to receive the power supply voltage from the battery pack 3; and an electrical component 73, for example an inverter, configured to provide electrical power to one or more of the supplementary electrical components installed on the vehicle.

In detail, the electrical component 73 comprises a plurality of high-voltage connectors 74 that may be coupled to the additional electrical components installed on the vehicle.

The auxiliary functional group 5C further comprises a respective additional high-voltage interlock loop circuit 76 (in the following simply additional HVIL circuit 76) coupled to the HVPDU 71 and to the electrical component 73, and configured to test the electrical continuity thereof.

The additional HVIL circuit 76 may comprise an input node 80, an output node 81 and a transmission structure 82 that extends between the input node 80 and the output node 81.

The input node 80 may comprise means, for example a voltage generator, configured to generate a monitoring signal, for example a low-voltage signal (e.g., 12 V).

The output node 81 may comprise means, for example current detectors, configured to measure a current flowing in the transmission structure 82 between the input node 80 and the output node 81.

The transmission structure 82, for example formed by one or more conductive cables, extends inside the HVPDU 71, in particular through the respective high-voltage connector 72; and inside the electrical component 73, in particular inside the respective high-voltage connector 74.

The high-voltage connectors 72, 74 are also configured, when correctly coupled to a high-voltage line, to close the current path of the additional HVIL circuit 76.

In practice, when the HVPDU 71 and the electrical component 73, in particular the respective high-voltage connectors 72, 74, are functioning correctly, the additional HVIL circuit 76 forms a (closed) current path, in particular a series-type path.

The electrical component 73 may also comprise a voltage converter 83, in particular provided with galvanic insulation, for coupling the transmission structure 82 between the inside and the outside of the electrical component 73.

An I/O interface 85 of the HVPDU 71 allows coupling the transmission structure 82 between the inside and the outside of the HVPDU 71.

The functional group 5D also comprises a further electronic control unit 53D, electrically coupled to the HVIL circuit 76.

In detail, in this embodiment, the input and output nodes 80, 81 of the additional HVIL circuit 76 are integrated in the electronic control unit 53D.

In use, the electronic control unit 53D monitors the electrical continuity of the additional HVIL circuit 76.

For example, in order to monitor the electrical continuity of the additional HVIL circuit 76, the electronic control unit 53D may apply a voltage difference between the input node 80 and the output node 81 and measure the current flowing along the transmission structure 82.

If the current measured along the transmission structure 82 falls below a threshold, which can be defined for example during a calibration or initialization step of the electrical system 1, then the electronic control unit 53D detects an electrical discontinuity in the additional HVIL circuit 76.

In other words, the electronic control unit 53D the occurrence of an electrical discontinuity within the additional HVIL circuit 76.

For example, an electrical discontinuity can occur if one of the high-voltage connectors 72, 74 undergoes a failure or a malfunction, for example it can become (entirely or partially) detached as the result of a collision or an accidental event of different type.

In response to the detection of an electrical discontinuity along the additional HVIL circuit 76, the electronic vehicle control unit 53D may remove or interrupt the high-voltage power supply to the HVPDU 71 and/or to the electrical component 73 from the battery pack 3.

In detail, the electronic vehicle control unit 53D may disconnect the functional group 5D from the battery pack 3.

In other words, the electronic vehicle control unit 53D may disconnect the additional components installed on the vehicle from the high-voltage power supply. In this manner, the additional components installed on the vehicle do not pose safety problems and risk of electrocution, and at the same time the vehicle can continue to function, since the functional groups 5A-5C continue to be powered by the battery pack 3.

This contributes to further increasing the versatility of the electrical system 1.

Finally, it is evident that modifications and variations can be made to the electrical system according to the present invention which anyway do not depart from the scope of protection defined by the claims.

For example, the electrical system 1 may comprise electrical components different from those shown, depending on the specific implementation, type and model of the vehicle, etc.

For example, the electronic control units 53A-53D may be part of one or more modules or electronic units of the vehicle, depending on the specific implementation. For example, the electronic control units 53A-53D may form one single electronic vehicle control unit.

## Claims

1. An electrical system (1) for an electric or hybrid vehicle and having an electrical supply source (3), comprising:
a plurality of high-voltage interlock loop, HVIL, circuits (13, 20, 40) electrically distinct one from the other; and
electronic control means (53A-53C, 9, 26, 33) configured to:
detect an electrical discontinuity in the plurality of HVIL circuits; and
regulate the electrical supply of the vehicle, in response to the detection of an electrical discontinuity in at least one of the HVIL circuits.

2. The electrical system according to the preceding claim, wherein regulating the electrical supply comprises interrupting the electrical supply of the vehicle, in response to the detection of an electrical discontinuity in at least one of the HVIL circuits.

3. The electrical system according to any of the preceding claims, wherein the plurality of HVIL circuits comprises a first HVIL circuit (13), the electrical system further comprising:
a first group of electrical components (7, 8) configured to be powered by the electrical supply source and to provide driving power to the vehicle,
wherein the first HVIL circuit is electrically coupled to the first group of electrical components, so as to test an electrical continuity among the electrical components of the first group of electrical components.

4. The electrical system according to the preceding claim, wherein the first group of electrical components comprises an electric motor (7) and/or an electrical power control unit (8).

5. The electrical system according to any of the preceding claims, wherein the plurality of HVIL circuits comprises a second HVIL circuit (20), the electrical system further comprising:
a second group of electrical components (21A-21B) configured to be powered by the electrical supply source and to control a temperature of the vehicle, for example the temperature of a cabin of the vehicle,
wherein the second HVIL circuit is electrically coupled to the second group of electrical components, so as to test an electrical continuity among the electrical components of the second group of electrical components.

6. The electrical system according to the preceding claim, wherein the second group of electrical components comprises at least one positive temperature coefficient heater (21A, 21B).

7. The electrical system according to any of the preceding claims, wherein the plurality of HVIL circuits comprises a third HVIL circuit (40), the electrical system further comprising:
a third group of electrical components (33, 37, 38) configured to be powered by the electrical supply source,
wherein the third HVIL circuit is electrically coupled to the third group of electrical components, so as to test an electrical continuity among the electrical components of the third group of electrical components.

8. The electrical system according to any of the preceding claims, wherein each HVIL circuit (13, 20, 40) comprises a respective input node (14, 25) and a respective output node (15, 26), a group of electrical components of the electrical system being mutually coupled so as to form a series current path between the input node and the output node of the respective HVIL circuit, so as to test the electrical continuity between the respective input node and the respective output node.

9. The electrical system according to any of claims 3-7, wherein each electrical component comprises at least one high-voltage electrical connector (10, 11, 23) coupled to the respective HVIL circuit (13, 16) so as to test a correct functioning of the at least one high-voltage electrical connector.

10. The electrical system according to any of the preceding claims, wherein, for detecting an electrical discontinuity in the HVIL circuits, the electronic control means are configured, for each HVIL circuit, to:
apply a respective voltage signal between an input node and an output node of the respective HVIL circuit; and
monitor a current that flows in the respective HVIL circuit.

11. The electrical system according to any of the preceding claims, further comprising a fourth group of electrical components (73, 71) configured to distribute part of the electrical supply of the electrical supply source to one or more components external to the vehicle and couplable to the vehicle, the electrical system further comprising an HVIL circuit (76) distinct from the plurality of HVIL circuits (13, 30, 40) and electrically coupled to the fourth group of electrical components, so as to test an electrical continuity among the electrical components of the fourth group of electrical components, the electrical system further comprising further electronic control means (53D) configured to detect an electrical discontinuity in the further HVIL circuit and, in response to the detection of an electrical discontinuity in the further HVIL circuit, to interrupt the distribution of electrical supply to the one or more components external to the vehicle.

12. The electrical system according to any of the preceding claims, further comprising a switch module (60) comprising at least one switch (61, 62, 63) coupled to one or more of the HVIL circuits (13, 20, 40) and configured to be manually controlled in order to cause an electrical discontinuity in at least one of the HVIL circuits of the plurality of HVIL circuits.

13. The electrical system according to the preceding claim, wherein the switch module (60) comprises a plurality of switches (61, 62, 63) each coupled to a respective HVIL circuit (13, 20, 40) of the plurality of HVIL circuits and configured to be manually controlled in order to cause an electrical discontinuity in the respective HVIL circuit.

14. The electrical system according to any of the preceding claims, wherein the electrical supply source is a high-voltage supply source.

15. An electric or hybrid vehicle, configured to be powered by an electrical supply source (3) and comprising the electrical system (1) according to any of the preceding claims.
